# EUROPÄISCHE PATENTSCHRIFT

(11) **EP 0 985 099 B1**
(45) Veröffentlichungstag und Bekanntmachung des Hinweises auf die Patenterteilung: **11.06.2003**
(21) Anmeldenummer: 98930770.7
(22) Anmeldetag: 30.05.1998
(51) Int. Cl.: F15B 1/033

(54) **DRUCKSTEUERUNGSSYSTEM**
PRESSURE CONTROL SYSTEM
DISPOSITIF DE COMMANDE PAR PRESSION

(30) Priorität: 06.06.1997 DE 19724015
(43) Veröffentlichungstag der Anmeldung: 15.03.2000
(73) Patentinhaber: HYDAC TECHNOLOGY GMBH, D-66280 Sulzbach (DE)
(72) Erfinder: ALME, Karl-Heinz, D-88097 Eriskirch (DE); KÖHLER, Michael, D-66571 Wiesbach (DE); ZYRULL, Karsten, D-66589 Merchweiler (DE)
(74) Vertreter: Patentanwälte Bartels und Partner
(86) Internationale Anmeldenummer: EP9803246
(87) Internationale Veröffentlichungsnummer: WO98055770

(56) Entgegenhaltungen:
- EP-A- 0 114 680
- EP-A- 0 447 791
- EP-A- 0 599 599
- DE-A- 3 518 985
- DE-A- 4 008 831
- GB-A- 1 234 148
- US-A- 4 428 401
- US-A- 4 815 751
- US-A- 5 632 146
- PATENT ABSTRACTS OF JAPAN vol. 008, no. 136 (M-304), 23. Juni 1984 & JP 59 035872 A (UBE KOSAN KK), 27. Februar 1984
- PATENT ABSTRACTS OF JAPAN vol. 016, no. 321 (M-1279), 14. Juli 1992 & JP 04 090917 A (HINO MOTORS LTD), 24. März 1992

## Beschreibung

Die Erfindung betrifft ein Drucksteuerungssystem mit den Merkmalen des Oberbegriffes des Anspruches 1.

Es ist Stand der Technik, dahingehende Drucksteuerungssysteme als Federungssysteme zur Anpassung an sich ändernde Lasten für Fahrzeugachsen, insbesondere bei Nutzfahrzeugen, auszubilden. Bei den dahingehend bekannten hydropneumatischen Federungssystemen ist eine Anpassung an die variable Achslast nur im Bereich des zulässigen Druckverhältnisses des Hydrooder Federungsspeichers möglich und somit stark eingeschränkt. Eine größere Variationsbreite an verschiedenen Achslasten kann nur realisiert werden, indem aus einer Vielzahl in Form einer sog. Batterie zusammengeschlossenen, parallel angeordneten Hydrospeichern der der jeweiligen Achslast entsprechende Hydrospeicher über die Steuerungsvorrichtung individuell zugeschaltet wird. Diese Lösung ist sehr aufwendig und mithin teuer und läßt darüber hinaus nur gestufte Achslastbereiche zu, so daß ein stetiger Verlauf der Federkennlinie mit den bekannten, auf dem Markt frei erhältlichen Lösungen nicht erreichbar ist.

Es ist zwar bei einem Federungssystem nach der DE 40 08 831 C2 bereits vorgeschlagen worden, für eine einfache Anpassung des Federungssystems an verschiedene Betriebszustände (Einstellung von Lastverhältnissen, Stoßgrad usw.) den Hydrospeicher über einen Anschluß und eine Druckleitung mit einer Druckeinstelleinrichtung zu verbinden, beispielsweise in Form einer pneumatischen Druckquelle mit entsprechendem Schaltventil; allein die dahingehende Ansteuerung ist weitgehend statisch und erlaubt keine exakten Anpaßvorgänge für den Vorspanndruck in Abhängigkeit der sich ändernden Lasten der jeweiligen Fahrzeugachse.

Durch PATENT ABSTRACTS OF JAPAN vol.008, no.136 (M-304) ist ein gattungsgemäßes Drucksteuerungssystem bekannt zur Anpassung an sich ändernde Lastsituationen. Ist die jeweilige Belastung oder Beanspruchung hoch, wird bei dieser bekannten Lösung ein hoher Vorspanndruck auf der Gasseite des Hydrospeichers für die Steuerungsvorrichtung eingestellt und mithin eine steile Druckkennlinie am hydraulischen Antrieb erreicht. Insgesamt ergibt sich hierbei auch ein verbessertes Druckdämpfungsverhalten in Abhängigkeit von der Lastsituation. Bei niedrigen auftretenden Lasten hingegen wird umgekehrt verfahren und der Vorspanndruck auf der Gasseite des Hydrospeichers entsprechend reduziert, wobei die Steuerungsvorrichtung mit der Steuereinheit rasche Einregelvorgänge für den gewünschten Vorspanndruck ermöglicht.

Ausgehend von diesem Stand der Technik in Form der vorbeschriebenen Federungssysteme liegt der Erfindung die Aufgabe zugrunde, ein demgegenüber erweitertes Drucksteuerungssystem zu schaffen, das erweiterte Einsatzmöglichkeiten aufweist. Eine dahingehende Aufgabe löst ein Drucksteuerungssystem mit den Merkmalen des Anspruches 1.

Dadurch, daß gemäß dem kennzeichnenden Teil des Anspruches 1 die Versorgungseinheit einen Gasverdichter aufweist, der den Vorspanndruck erzeugt und über eine Versorgungsleitung an die Steuereinheit angeschlossen ist und daß als Zwischenspeicher mindestens ein Vorratsspeicher vorgesehen ist, in den der Gasverdichter das Arbeitsmedium liefert, kann der Gasverdichter den eigentlichen Gasvorspanndruck erzeugen und in mehreren Stufen die Verdichtung für das Arbeitsmedium vornehmen. Sofern mehrere Zwischenspeicher als Puffer dienen, kann der Gasverdichter aus dem einen Zwischenspeicher zu verdichtendes Gas entnehmen und dieses verdichtete Gas in den weiteren Zwischenspeicher als Puffer abspeichern.

Vorzugsweise besteht der hydraulische Antrieb aus einem Linearantrieb, insbesondere in Form eines hydraulischen Arbeitszylinders; es kann aber auch ein Hydromotor als hydraulischer Antrieb angesteuert werden. Die dahingehenden Antriebe können nicht nur als Federdämpfungssysteme für Fahrzeugachsen eingesetzt werden; sondern vielmehr auch auf anderen Gebieten, wie bei Fahrstühlen, Hebebühnen aber auch als hydraulische Antriebe bei Arbeitsund Werkzeugmaschinen.

In Einzelfällen, sofern eine dynamische fortlaufende Anpassung des Vorspanndruckes gewünscht ist, kann vorgesehen sein, daß der Drucksensor an eine Rechnereinheit (Mikroprozessor) angeschlossen ist, die die Druckwerte auswertet und die Steuerungsvorrichtung für die dynamischen Anpassungsprozesse fortlaufend ansteuert.

Weitere vorteilhafte Ausführungsformen sind Gegenstand der Unteransprüche.

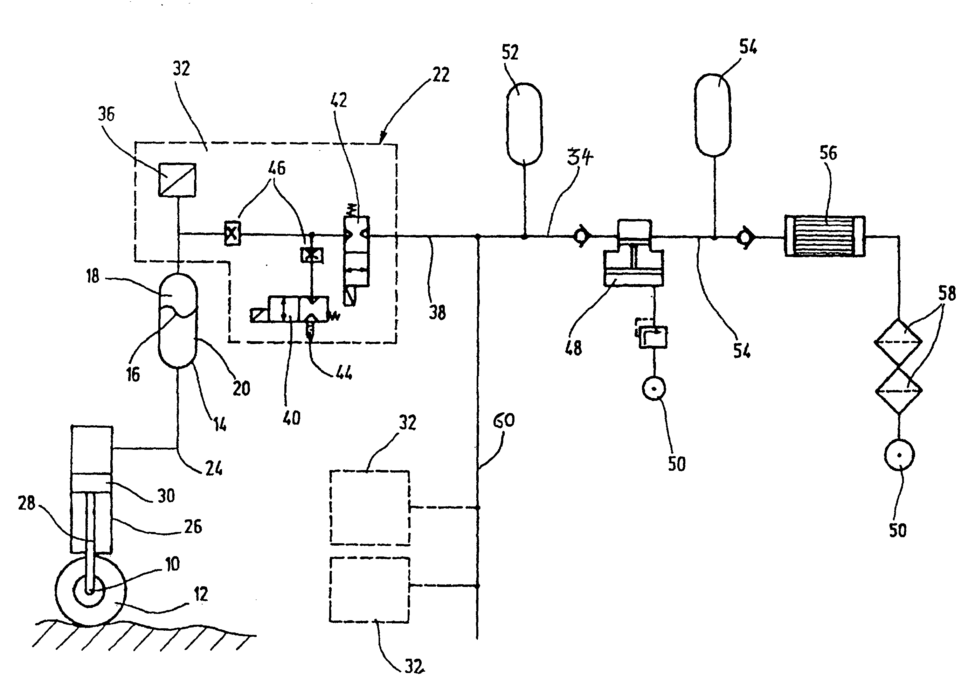

Im folgenden wird das Drucksteuerungssystem anhand einer Ausführungsform, bezogen auf ein Federungssystem, näher erläutert. Dabei zeigt die einzige Figur eine prinzipielle Schaltdarstellung eines dahingehenden Federungssystems.

Das angesprochene Federungssystem dient der Anpassung an sich ändernde Lasten für Fahrzeugachsen, wobei in der Figur eine dahingehende einzelne Fahrzeugachse 10 prinzipiell dargestellt ist. Um diese Achse 10 drehbar ist ein Fahrzeugreifen 12 angeordnet, der als feststehender Radkranz alternativ auch dem Antrieb eines Kettentriebes (nicht dargestellt) dienen kann. Der Einsatz des nachfolgend beschriebenen Federungssystems ist insbesondere lohnend im Mobilfahrzeugbau, also für Schwerlast-Nutzfahrzeuge, Mobilkrane, Traktoren, Muldenkipper und dergleichen, d.h. insbesondere für Einsatzfälle, wo schwere veränderbare Achslasten auftreten können.

Das Federungssystem weist einen Hydrospeicher 14 auf, der als Federungsspeicher dient und der in üblicher Bauweise ausgeführt ist, beispielsweise als Membranspeicher. Symbolisch ist in dem Hydrospeicher 14 daher eine gummielastische Trennmembran 16 dargestellt, die eine Gas-Vorratskammer 18 gasdicht von einer Fluid-Vorratskammer 20, die vorzugsweise mit Hydrauliköl befüllt ist, trennt. Der Vorspanndruck auf der Gasseite des Hydrospeichers 14 läßt sich über eine als Ganzes mit 22 bezeichnete Steuerungsvorrichtung einstellen. Auf seiner Fluidseite ist der Hydrospeicher 14 über eine Verbindungsleitung 24 an einen hydraulischen Arbeitszylinder 26 als Linearantrieb kolbenseitig angeschlossen. In dieser Verbindungsleitung ist bevorzugt mindestens ein ansteuerbares Schaltventil angeordnet, insbesondere zum Abschalten der Fluidseite des Hydrospeichers 14. Der Arbeitszylinder 26 dient als Feder-Dämpfungszylinder für die Fahrzeugachse 10 und ist vorzugsweise an beiden Enden der Fahrzeugachse 10 angeordnet und jeweils an den Hydrospeicher 14 angeschlossen. Mithin wirkt die Kolbenstange 28 des hydraulischen Kolbens 30 mit ihrem freien Ende unmittelbar auf die Fahrzeugachse 10 ein. Wie noch näher erläutert werden wird, ist die Federkennlinie des Arbeitszylinders 26 über das Ansteuern des Gasvorspanndruckes des Hydrospeichers 14 über die Steuerungsvorrichtung 22 automatisch einstellbar.

Die Steuerungsvorrichtung 22 weist eine Steuereinheit 32 und eine Versorgungseinheit 34 auf. Die Steuereinheit 32 weist zur Bestimmung des Gasvorspanndruckes des Hydrospeichers 14 einen üblichen Drucksensor 36 auf, der über einen Nebenzweig an die Versorgungsleitung 38 für den Hydrospeicher 14 angeschlossen ist. Zum wechselweisen Befüllen und Ablassen des Arbeitsmediums in der Gas-Vorratskammer 18 des Hydrospeichers 14, insbesondere in Form von Stickstoffgas, dienen zwei übliche 2/2-Wege-Schaltventile 40,42, die in der Prinzipdarstellung in ihrer Sperrstellung dargestellt sind. Ist ein vorgegebener Vorspanndruck im Hydrospeicher 14 erreicht, nehmen die beiden Schaltventile 40,42 diese gezeigte Sperrstellung ein, um den Hydrospeicher 14 als Dämpfungsspeicher volumetrisch abzusperren.

Zur Erniedrigung des Gasvorspanndruckes in der Gas-Vorratskammer 18 wird das Schaltventil 40 betätigt und in seiner durchlassenden Stellung kann das Stickstoffgas über die Dämpfungseinheit 44 in die Umgebung abströmen. In seiner geschalteten Durchlaßstellung dient das 2/2-Wege-Ventil 42 hingegen dazu, den Hydrospeicher 14 mit seiner Gasseite und über die Versorgungsleitung 38 an die Versorgungseinheit 34 anzuschließen. Um die Strömungsvorgänge während der vorbeschriebenen Regulierungsphase klein und somit gut kontrollierbar zu halten, sind entsprechende Drosselstellen in Form von Blenden 46 vorgesehen.

Die Versorgungseinheit 34 weist einen Gasverdichter oder Kompressor 48 üblicher Bauart auf, der den eigentlichen Gasvorspanndruck erzeugt und über die Versorgungsleitung 38 an die Steuereinheit 32 angeschlossen ist. Der Gasverdichter 48 ist dabei über ein Druckregelventil in üblicher Weise an eine Druckversorgung 50 angeschlossen und gibt komprimiertes Stickstoffgas im Betrieb an die Versorgungsleitung 38 ab. Der Gasverdichter 48 kann in mehreren Stufen (nicht dargestellt) die Verdichtung für das Arbeitsmedium vornehmen. Des weiteren sind an die Versorgungsleitung 38 vor und hinter dem Gasverdichter 48 zwei Zwischenspeicher 52,54 als Puffereinheit angeschlossen in Form von üblichen Gas-Vorratsspeichern, wobei der Gasverdichter 48 aus der Puffereinheit 54 zu verdichtendes Gas entnehmen kann und dieses verdichtete Gas dann als Zwischenstation in die Puffereinheit 52 abspeichert.

Zur Gasbereitstellung dient ein handelsübliches Gas-Trennmodul 56, das eingangsseitig über Filtereinheiten 58 an das Druckluftversorgungsnetz 50 des Fahrzeuges angeschlossen ist. Über dieses Druckluftnetz 50 erhält das Gas-Trennmodul 56 Druckluft und separiert dann aus dieser Druckluft das benötigte Arbeitsgas, hier in Form von Stickstoff angereichertem Gas. Ausgangsseitig speist dann das Gas-Trennmodul 56 das gegebenenfalls nicht reine Stickstoffgas in die Versorgungsleitung 38 und mithin in die jeweilige Verdichtungskammer des Gasverdichters 48. Um ein ungewolltes Zurückströmen des Arbeitsmediums zum Gasverdichter 48 und zum Gas-Trennmodul 56 zu verhindern, ist in der Versorgungsleitung 38 zwischen Puffereinheit 52 und Gasverdichter 48 bzw. zwischen Puffereinheit 54 und Gas-Trennmodul 56 je ein Rückschlagventil geschaltet.

Da Nutzfahrzeuge in der Regel mehrere ansteuerbare Fahrzeugachsen aufweisen, können jeder Fahrzeugachse zugeordnet weitere Steuereinheiten 32 vorgesehen sein, die auf zugeordnete Hydrospeicher 14 mit Arbeitszylindern 26 einwirken. Diese können in einer Abzweigleitung 60 an die Versorgungsleitung 38 und mithin an die Versorgungseinheit 34 zentral angeschlossen sein.

Treten nun höhere Achslasten an der Fahrzeugachse 10 auf, ist die Gasvorspannung in der Gas-Vorratskammer 18 des Hydrospeichers 14 zu erhöhen. Hierzu steuert die Steuereinheit 32 dann das Schaltventil 42 auf und über die Puffereinheit 52 kann Stickstoffgas hohen Druckes abgerufen und in die Gas-Vorratskammer 18 gebracht werden, was zu einer Erhöhung des Fluiddruckes in der Fluid-Vorratskammer 20 und in der Verbindungsleitung 24 führt sowie im kolbenseitigen Fluidraum des Arbeitszylinders 26. Es stellt sich dann eine steilere Federkennlinie als Druckkennlinie für diesen Arbeitszylinder 26 ein. Der Gasvorrat hohen Druckes in der Puffereinheit 52 wird dabei über den Gasverdichter 48 erzeugt, der einen Gasvorrat niederen Druckes unmittelbar aus der Puffereinheit 54 abrufen kann, wobei die Puffereinheit 54 quasi kontinuierlich über das Gas-Trennmodul 56 mit Stickstoffgas aus dem Druckluftnetz 50 nachgefüllt werden kann. Wird ein vorgegebener Druck im Hydrospeicher 14 erreicht, stellt dies der Drucksensor 36 fest und sperrt über die Ansteuerung der Steuereinheit 32 die Schaltventile 40,42 in ihre Sperrstellung. Im umgekehrten Fall, also bei niedriger Achslast und korrespondierend niedrigem Gasvorspanndruck in der Gas-Vorratskammer 18, öffnet das Schaltventil 40 und das überflüssige Stickstoffgas wird über die Dämpfungseinheit 44 in die Umgebung abgeführt. Je nach Dimensionierung des Hydrospeichers 14 können auch mehrere Arbeitszylinder 26 von einem Hydrospeicher 14 zentral versorgt werden. Ebenso können in Abhängigkeit der Größe der Puffereinheiten 52,54 einzelne Puffereinheiten mehrere Steuereinheiten 32 und Hydrospeicher 14 versorgen. Die Fahrzeugachse 10 kann im Sinne der Erfindung auch aus einer Einzelradachse gebildet sein.

Neben der Ausbildung des erfindungsgemäßen Drucksteuerungssystems als Federungsystem sind weitere Anwendungen denkbar, wo Druckkennlinien von hydraulischen Antrieben, insbesondere Linearantrieben, anzusteuern sind. Dahingehende Bereiche sind in der allgemeinen hydraulischen Antriebstechnik zu finden, wobei sich auch Druckkennlinien von Hydromotoren od.dgl. mit dem Drucksteuerungssystem entsrpechend der auftretenden Lastsituationen günstig beeinflussen lassen.

## Patentansprüche

1. Drucksteuerungssystem zur Anpassung an sich ändernde Lastsituationen mit einem Hydrospeicher (14), dessen Vorspanndruck über eine Steuerungsvorrichtung (22) mit Versorgungseinheit (34) ansteuerbar ist, und der an mindestens einen hydraulischen Antrieb angeschlossen ist, dessen Druckkennlinie durch Ansteuern des Vorspanndruckes des Hydrospeichers (14) über ein Arbeitsmedium der Steuerungsvorrichtung (22) einstellbar ist, wobei die Steuerungsvorrichtung (22) eine Steuereinheit (32) aufweist, die zur Bestimmung des Vorspanndruckes einen Drucksensor (36) aufweist und die in Abhängigkeit der Lastsituation wechselweise eine mengenmäßige Zu- oder Abnahme des Arbeitsmediums vornimmt, **dadurch gekennzeichnet, daß** die Versorgungseinheit (34) einen Gasverdichter (48) aufweist, der den Vorspanndruck erzeugt und über eine Versorgungsleitung (38) an die Steuereinheit (32) angeschlossen ist und daß als Zwischenspeicher (52,54) mindestens ein Vorratsspeicher vorgesehen ist, in den der Gasverdichter (48) das Arbeitsmedium liefert.

2. Drucksteuerungssystem nach Anspruch 1, **dadurch gekennzeichnet, daß** der hydraulische Antrieb ein Linearantrieb, insbesondere ein hydraulischer Arbeitszylinder (26) ist oder ein Hydromotor.

3. Drucksteuerungssystem nach Anspruch 1 oder 2, **dadurch gekennzeichnet, daß** es zur Anpassung an sich ändernde Lasten bei Fahrzeugachsen (10), insbesondere bei Nutzfahrzeugen, vorgesehen ist.

4. Drucksteuerungssystem nach einem der Ansprüche 1 bis 3, **dadurch gekennzeichnet, daß** für die mengenmäßige Zu- und Abnahme des Arbeitsmediums, insbesondere in Form von Stickstoffgas, eine Schalteinrichtung vorhanden ist.

5. Drucksteuerungssystem nach einem der Ansprüche 1 bis 4, **dadurch gekennzeichnet, daß** für eine dynamische, fortlaufende Anpassung des Vorspanndruckes der Drucksensor (36) an eine Rechnereinheit angeschlossen ist, die die Steuerungsvorrichtung (22) ansteuert.

6. Drucksteuerungssystem nach Anspruch 4 oder 5, **dadurch gekennzeichnet, daß** die Schalteinrichtung für die mengenmäßige Änderung des Arbeitsmediums je ein Schaltventil (40,42) und/oder ein Regelventil aufweist.

7. Drucksteuerungssystem nach Anspruch 6, **dadurch gekennzeichnet, daß** das eine Schaltventil (40) zum anderen Schaltventil (42) im Nebenzweig angeordnet ist und eine Abgabestelle (44), insbesondere in die Umgebung für das Arbeitsmedium aufweist.

8. Drucksteuerungssystem nach einem der Ansprüche 1 bis 7, **dadurch gekennzeichnet, daß** der Gasverdichter (48) an ein Druckluftnetz (50) des Fahrzeuges angeschlossen ist und daß ein Gas-Trennmodul (56) das Arbeitsmedium, insbesondere Stickstoffgas, von der Druckluft separiert und dem Gasverdichter (48) zuführt.

9. Drucksteuerungssystem nach einem der Ansprüche 6 bis 8, **dadurch gekennzeichnet, daß** jedem Schaltventil (40,42) der Steuereinheit (32) zugeordnet eine Blende (46) oder eine Drossel vorhanden ist.

10. Drucksteuerungssystem nach einem der Ansprüche 3 bis 9, **dadurch gekennzeichnet, daß** jeder Fahrzeugachse (10) die Steuereinheit (32) sowie mindestens ein Arbeitszylinder (26) als Verbraucher zugeordnet ist, die gemeinsam von der einen Versorgungseinheit (34) versorgt sind.

## Claims

1. Pressure control system capable of adapting to changing load situations, having a hydraulic accumulator (14), the pre-load pressure of which can be controlled via a control device (22) with a supply device (34) and which is connected to at least one hydraulic drive, the pressure characteristic of which can be adjusted by controlling the pre-load pressure of the hydraulic accumulator (14) via a working medium in the control device (22), the control device (22) having a control unit (32) which has a pressure sensor (36) for determining the pre-load pressure, and alternately increases and decreases the quantity of the working medium in relation to the load situation, **characterised in that** the supply unit (34) has a gas compressor (48) which produces the pre-load pressure and is connected to the control unit (32) via a supply line (38), and that at least one supply accumulator is provided as the intermediate accumulator (52, 54) to which the gas compressor (48) supplies the working medium.

2. Pressure control system according to claim 1, **characterised in that** the hydraulic drive is a linear drive, particularly a hydraulic operating cylinder (26) or a hydraulic motor.

3. Pressure control system according to claim 1 or 2, **characterised in that** it is capable of adapting to varying loads at vehicle axles (10), particularly on utility vehicles.

4. Pressure control system according to one of the claims 1 to 3, **characterised in that** it has a switching device for increasing and decreasing the quantity of the working medium, particularly in the form of nitrogen gas.

5. Pressure control system according to one of the claims 1 to 4, **characterised in that**, to achieve dynamic and continuous adaptation of the pre-load pressure, the pressure sensor (36) is connected to a computer which biases the control device (22).

6. Pressure control system according to claim 4 or 5, **characterised in that** the switch device has a switch valve (40, 42) and/or a regulating valve each for changing the quantity of the working medium.

7. Pressure control system according to claim 6, **characterised in that** a switch valve (40) is arranged in a side branch in relation to the switch valve (42) and has an output point (44), particularly to the environment for the working medium.

8. Pressure control system according to one of the claims 1 to 7, **characterised in that** the gas compressor (48) is connected to the vehicle pressure mains (50) and that a gas separating module (56) separates the working medium, particularly nitrogen gas, from the compressed air and feeds it to the gas compressor (48).

9. Pressure control system according to one of the claims 6 to 8, **characterised in that** a diaphragm (46) or a throttle is allocated to each switch valve (40, 42) of the control unit (32).

10. Pressure control system according to one of the claims 3 to 9, **characterised in that** the control unit (32) and at least one working cylinder (26) are allocated as consumers to each vehicle axle (10), jointly supplied by one supply unit (34).

## Revendications

1. Système de pilotage de la pression pour l'adaptation à des situations de charge variables avec un accumulateur hydraulique (14), dont la pression de précontrainte est pilotable par un dispositif de pilotage (22) avec une unité d'alimentation (34) et qui est relié à au moins un entraînement hydraulique dont la courbe caractéristique de pression peut être réglée en pilotant la pression de précontrainte de l'accumulateur hydraulique (14) par un fluide moteur du dispositif de pilotage (22), moyennant quoi le dispositif de pilotage (22) présente une unité de commande (32), qui présente un capteur de pression (36) pour déterminer la pression de précontrainte et qui en fonction de la situation de charge entreprend alternativement une augmentation ou une diminution quantitative du fluide moteur, **caractérisé en ce que** l'unité d'alimentation (34) présente un compresseur à gaz (48), qui produit la pression précontrainte et qui est relié à l'unité de commande (32) par une conduite d'alimentation (38) et **en ce qu'**est prévu comme accumulateur intermédiaire (52, 54) au moins un accumulateur de réserve dans lequel le compresseur à gaz (48) livre le fluide moteur.

2. Système de pilotage de la pression selon la revendication 1, **caractérisé en ce que** l'entraînement hydraulique est un entraînement linéaire, en particulier un cylindre moteur hydraulique (26) ou un moteur hydraulique.

3. Système de pilotage de la pression selon l'une quelconque des revendications 1 ou 2, **caractérisé en ce qu'**il est prévu pour l'adaptation à des charges variables sur des essieux de véhicules (10), en particulier pour des véhicules utilitaires.

4. Système de pilotage de la pression selon l'une quelconque des revendications 1 à 3, **caractérisé en ce qu'**il y a pour l'augmentation ou la réduction du fluide moteur en particulier sous la forme d'azote, un organe de commutation.

5. Système de pilotage de la pression selon l'une quelconque des revendications 1 à 4, **caractérisé en ce que** pour une adaptation dynamique et continue le capteur de pression (36) est relié à une unité de calcul qui commande le dispositif de pilotage (22).

6. Système de pilotage de la pression selon la revendication 4 ou 5, **caractérisé en ce que** l'organe de commutation présente respectivement pour la variation quantitative du fluide moteur une vanne de commutation (40, 42) et/ou une vanne de régulation.

7. Système de pilotage de la pression selon la revendication 6, **caractérisé en ce que** l'une des vannes de commutation (40) est placée en branchement secondaire à l'autre vanne de commutation (42) et présente une sortie (44), en particulier à proximité pour le fluide moteur.

8. Système de pilotage de la pression selon l'une quelconque des revendications 1 à 7, **caractérisé en ce que** le compresseur à gaz (48) est relié à un réseau d'air comprimé (50) du véhicule et **en ce qu'**un module de séparation de gaz (56) sépare le fluide moteur, en particulier l'azote, de l'air comprimé et conduit au compresseur à gaz (48).

9. Système de pilotage de la pression selon l'une quelconque des revendications 6 à 8, **caractérisé en ce qu'**un diaphragme (46) ou un étranglement est affecté à chaque vanne de commutation (40, 42) de l'unité de commande (32).

10. Système de pilotage de la pression selon l'une quelconque des revendications 3 à 9, **caractérisé en ce que** l'unité de commande (32) ainsi qu'au moins un cylindre moteur (26) sont attribués à chaque essieu de véhicule (10) comme consommateur, qui sont alimentés en commun par l'unité d'alimentation (34).
